# EUROPEAN PATENT APPLICATION

(11) **EP 4 327 970 A1**
(43) Date of publication of application: **28.02.2024**
(21) Application number: 22192014.3
(22) Date of filing: 24.08.2022
(51) Int. Cl.: B23C 5/00, B23C 5/22, B23C 5/24

(54) **ROTARY MILLING CUTTER**

(71) Applicant: FIUDI S.r.l., 10098 Rivoli (TO) (IT)
(72) Inventor: CATALDI, Emilio, RIVOLI (TO) (IT); PANEGHINI, Paolo, RIVOLI (TO) (IT)
(74) Representative: Robba, Pierpaolo

(57) **Abstract**

Rotary milling cutter (11) having at least one cutting blade-holding cartridge (13) and comprising an elongated cylindrical body (15) in which there are provided an engagement portion (17), adapted to be associated with the spindle of a rotary tool, and a working portion (19), comprising at least one cartridge-holding radial seat (21) capable of housing a cutting blade-holding cartridge (13), wherein said seat (21) comprises a pair of mutually opposite grooves (23,25), and wherein said seat (21) comprises a corresponding pair of complementary projections (27,29) arranged to be received in said grooves (23,25) so as to retain the cartridge (13) within the seat (21) during rotation of the milling cutter.

## Description

### Technical Field

The invention relates to a rotary milling cutter having a cutting blade-holding cartridge and a method for retaining said cutting blade-holding cartridge in said rotary milling cutter.

### Prior Art

In the field of machining, both finishing and roughing, by material removal, milling cutters are known equipped with interchangeable cartridges to which a cutting blade performing the machining operation is associated.

Milling cutters generally consist of an elongated cylindrical body with an end that can be associated with a tool spindle, such as the drill of a CNC machine for machining metal components. During machining, the milling cutter is set into high-speed rotation by the tool, and the cutting blade associated with each cartridge of the milling cutter performs the desired machining operation. When the cutting edge has become exhausted, i.e., when it can no longer properly perform the machining operation for which it was intended, the cartridge with the exhausted cutting blade is removed from the milling cutter and replaced with a new or reconditioned one. Thus, it is evident that milling cutters with removable cartridges must undergo frequent maintenance for the replacement of cutting blades. Each milling cutter may also incorporate more than one cutting blade, typically four or more cutting blades, and replacement of all cartridges takes time proportional to the number of cutting blades provided in the milling cutter.

Therefore, numerous solutions to the problem of how to make it easy and quick to replace cutting blades, and thus the cartridges holding them, in milling cutters of various kinds were developed in the past.

In addition to this need, there is the problem of how to prevent the cutting blade-holding cartridges from becoming detached from the body of the milling cutter and being thrown around in the surroundings with remarkable risk of damages to things and people.

A number of solutions were developed in the past to solve this second problem, such solutions usually involving the use of fixing screws, operating in conjunction with abutment surfaces or stop surfaces provided in the milling cutter. These surfaces are configured to counteract detachment of the cartridges, which would inevitably take place as a result of the centrifugal force, if the fixing screw becomes loose, for example because of vibrations during machining.

A further problem encountered in designing milling cutters with interchangeable cutters lies in the necessity to configure the cartridge so as to promote, and thus not hinder, removal of the chips generated during machining with the cutting blades. Indeed, it is evident that any accumulation of chips and shavings near or in contact with the milling cutter, can cause the undesired effect of overheating the surfaces of the cutting blades, this resulting in early deterioration thereof and decay in the performance of the machining in progress.

The problem of the undesired accumulation of machining chips is aggravated by the provision of the abutment surfaces necessary to retain the cartridge and prevent it from being violently thrown around in the surroundings during machining with the milling cutter if the fixing screw becomes accidentally loose. Said abutment or stop surfaces, indeed, limit the freedom of the designer and prevent to realize cutting blade-holding cartridges with an appropriate shape optimized to promote removal of chips.

A first problem that the present invention intends to solve is thus how to increase the removal of shavings, while maintaining a high grade of security in preventing the risk of the cartridges becoming detached in milling cutters with removable cartridges for machining.

A second object of the invention is to provide a method for retaining the cartridge in the milling cutter that is easy to manufacture and allows quick replacement of the cartridges.

A further object of the invention is to provide a milling cutter and a method of the aforementioned type that are suitable to be implemented on a plurality of milling cutters of different type and size, equipped with one or more cutting blades and configured essentially to perform all types of machining by material removal, in particular in metal components.

Not least object of the invention is to provide a milling cutter and a method for retaining cutting blade holding-cartridges that can be manufactured in a cost-effective manner and are therefore suitable for a large-scale industrial production.

These and other objects are obtained with the milling cutter and the retaining method as claimed in the appended claims.

### Disclosure of the Invention

The rotary milling cutter according to the invention is provided with at least one cutting blade-holding cartridge and mainly comprises an elongated cylindrical body, preferably made of aluminum, or an aluminum alloy, in which an engagement portion and a working portion are defined. Preferably, the elongated cylindrical body has a circular cross-section.

The engagement portion is associatable with the spindle of a motorized rotary tool and the working portion comprises at least one cartridge-holding radial seat, adapted to house a cutting blade-holding cartridge. Preferably, the milling cutter according to the invention comprises a plurality of cartridge-holding radial seats arranged in a sunburst pattern around the axis of symmetry of the milling cutter.

According to the invention, the seat for the interchangeable cartridge comprises a pair of grooves essentially opposed to each other, and the cartridge in turn comprises a corresponding pair of projections complementary to said grooves. Still according to the invention, the projections can be received in said grooves, so as to retain the cartridge in the corresponding radial seat during the rotary movement of the milling cutter, which movement is imparted by the spindle of the motorized tool.

Preferably, according to the invention, the grooves and the projections extend outside the body of the cartridge, along a rectilinear direction, substantially parallel to the rotation axis of the milling cutter. Also, said rotation axis preferably corresponds to the axis of symmetry of the cylindrical body of the milling cutter.

As, according to the invention, the main purpose of the mutual engagement between the grooves and the projections is to retain the cartridge in the seat of the milling cutter, during high-speed rotation of the milling cutter, the section and orientation of the grooves and projections will suitably be chosen to meet this requirement, without, however, jeopardizing the capability of the cartridge to evacuate chips during machining.

Said grooves and said projections may have, for example, a substantially rectangular or square cross-section. In addition, the projections preferably comprise an uninterrupted rectilinear body. However, it will also be possible to provide for replacing said rectilinear body of one or more projections with corresponding teeth essentially defined by one or more interruptions in said rectilinear body.

Preferably, the cartridge-holding seat provided in the milling cutter further comprises an axial opening at the base of the working portion of the milling cutter. Said axial opening is arranged for inserting the cartridge into the corresponding seat. Preferably, therefore, the insertion of the cartridge takes place by means of an axial sliding movement of the projections within the respective grooves, along a substantially axial direction, which can, for example, be substantially parallel to the axis of symmetry of the cylindrical body of the milling cutter.

The grooves preferably extend over a significant portion of the corresponding seat in which they are defined, and, even more preferably, over at least 2/3 of the axial depth of said seat, so as to guarantee proper retainment of the cutting blade-holding cartridge during the high-speed rotation of the spindle with which the milling cutter is associated.

According to the invention, the grooves are preferably formed on two opposite walls of the seat for the removable cartridge. Even more preferably, a first wall is defined on a radial plane substantially parallel to the axis of symmetry of the milling cutter and tangent to a first circumference provided on a plane perpendicular to the axis of the milling cutter, and a second wall is defined on a radial plane which is also substantially parallel to the axis of the milling cutter and tangent to a second circumference provided on a plane perpendicular to the axis of the milling cutter. According to the invention, the radius of the circumference to which the plane of the wall which first encounters the workpiece being machined during rotation of the milling cutter is tangent is greater than the radius of the circumference to which the plane of the wall which is the last to encounter said workpiece and to which the blade is fixed is tangent.

The arrangement of the walls of the seat for the removable cartridge is preferably such that the groove defines three mutually perpendicular walls, the bottom wall being parallel to the plane of the wall in which the groove is provided.

Preferably, according to the invention, the radial seat for the removable cartridge, the grooves and the projections are configured so as to firmly retain the cartridge in the seat during rotation of the tool and so that the insertion of the cartridge into the seat can take place easily, preferably by sliding the projections, entering through the axial opening, in the corresponding grooves.

The cutting blade-holding cartridge according to the invention comprises an elongated metal body, for example, made of a hard material coated with titanium-aluminum nitride TiAIN, in which a solid fixing portion is provided having a hole for a screw engaging in the body of the milling cutter in a corresponding threaded hole provided in the bottom wall of the radial seat for the cartridge.

In the body of the cartridge there is further provided a hollow working portion defining a fixing surface for a cutting blade. The cutting blade may be, for example, a polycrystalline diamond bit, fixed to the fixing surface, for example, by means of braze-welding or other known means.

In the hollow portion of the cartridge there is further provided a chip-evacuation cavity or gap, having substantially plan opposite walls, which are non-parallel to each other and diverging outwards, so as to promote evacuation of the chips formed while the milling cutter is working, as a result of the action of the cutting blade against the surface of an object to be machined. The bottom wall of the cavity has a preferably curved sloping surface defining a corresponding ramp from the fixing portion of the cartridge towards the open end of the working portion of the cartridge.

In addition, the walls of the cavity are substantially parallel to the first and second wall of the radial seat for the cartridge, respectively, and, therefore, they are also tangent to two circumferences, with different diameters, arranged concentrically around the axis of symmetry of the cylindrical body of the milling cutter, wherein the wall tangent to the circumference with greater diameter is the one preceding, during rotation of the milling cutter, the cutting blade when said blade encounters the workpiece to be machined. Said cutting blade is thus preferably associated with the wall extending on the plane tangent to the circumference with smaller diameter.

### Brief Description of Drawings

Some preferred embodiments of the invention will be provided by way of non-limiting example with reference to the annexed drawings, in which:

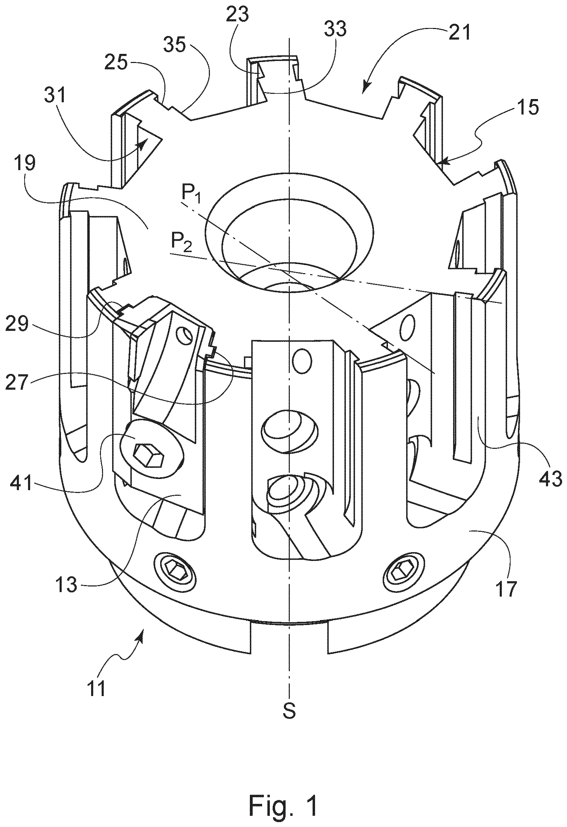

- Fig. 1 is a top perspective view of a milling cutter according to the invention, in which a cutting blade-holding cartridge is received;
- Fig.2 is a top perspective view of a cutting blade-holding cartridge;
- Fig.3 is a cross-section of the working portion of the cartridge of Fig.2;
- Fig.4 a top plan schematic view of the milling cutter of Fig.1.

### Description of a Preferred Embodiment

Referring to the annexed drawings, the milling cutter according to the invention has been indicated generally with reference numeral 11. The milling cutter 11 is provided with at least one cutting blade-holding cartridge 13 and comprises an elongated cylindrical body 15, in which an engagement portion 17 and a working portion 19 are provided. The engagement portion 17 is adapted to engage in the spindle (not shown) of a rotary tool and the working portion 19 comprises at least one cartridge-holding radial seat 21 capable of housing a cutting blade-holding cartridge 13.

According to the invention, said seat 21 comprises a pair of opposite grooves 23, 25 and the cartridge 13 comprises a corresponding pair of projections 27, 29 complementary to said grooves 23, 25 and adapted to be received therein, so as to retain the cartridge 13 within the seat 21 during the rotation of the milling cutter imparted by the tool spindle.

In the illustrated embodiment, the milling cutter 11 comprises nine cartridge-holding radial seats 21 for a corresponding number of cutting blade-holding cartridges 13. Obviously, it will be possible to provide any number of seats, according to the type and size of the milling cutter.

Still referring to the illustrated embodiment, said grooves 23, 25 and said projections 27, 29 extend along a rectilinear direction, substantially parallel to the rotation axis "S" of the milling cutter. In the illustrated embodiment, said rotation axis essentially corresponds to the axis of symmetry of the cylindrical body 15 of the milling cutter 11.

As, according to the invention, the main purpose of the mutual engagement between the grooves 23, 25 and the projections 27, 29 is to retain the cartridge 13 in the seat 21 during the high-speed rotation of the milling cutter, the cross-section and orientation of the grooves 23, 25 and those of the projections 27, 29 will suitably be chosen to meet this requirement.

In the illustrated embodiment, for example, said grooves and said projections have a substantially rectangular cross-section. In addition, although the projections 27, 29 comprise, in the illustrated embodiment, an uninterrupted rectilinear body, it will also be possible to provide for replacing one or both of the projections with corresponding teeth essentially defined by one or more interruptions in said rectilinear body.

In the illustrated embodiment, the cartridge-holding seat 21 comprises an axial opening 31 at the base of the working portion 19 of the milling cutter 11 for inserting the cartridge into the seat 21 by means of an axial sliding movement of the projections 27, 29 within the respective grooves 23, 25, along a substantially axial direction.

Preferably, the grooves 23, 25 extend over at least 2/3 of the axial depth of the seat 21, so as to guarantee proper retainment of the blade-holding cartridge 13 during the high-speed rotation of the spindle with which the milling cutter 11 is associated.

In the illustrated embodiment, the grooves 23, 25 are formed on two opposite walls 33, 35 of the seat 21, wherein a first wall 33 is defined on a radial plane PI parallel to the axis "S" of the milling cutter and tangent to a first circumference "C1" on a plane perpendicular to the axis "S" of the milling cutter 11, and a second wall 35 is defined on a radial plane P2 parallel to the axis "S" of the milling cutter 11 and tangent to a second circumference "C2" on a plane perpendicular to the axis of the milling cutter 11, said second circumference "C2" having a radius "r2" greater than the radius "r1" of the first circumference "C1".

In the illustrated embodiment, the arrangement of the walls of the seat 21 is preferably such that the groove 23, 25 defines three mutually perpendicular walls, the bottom wall being parallel to the plane 33, 35 of the wall in which the groove is provided.

Preferably, according to the invention, the seat 21, the grooves 23, 25 and the projections 27, 29 are configured so as to firmly retain the cartridge 13 in the seat 21 during rotation of the tool and so that the insertion of the cartridge into the seat 21 can take place by sliding the projections 27, 29 in the corresponding grooves 23, 25.

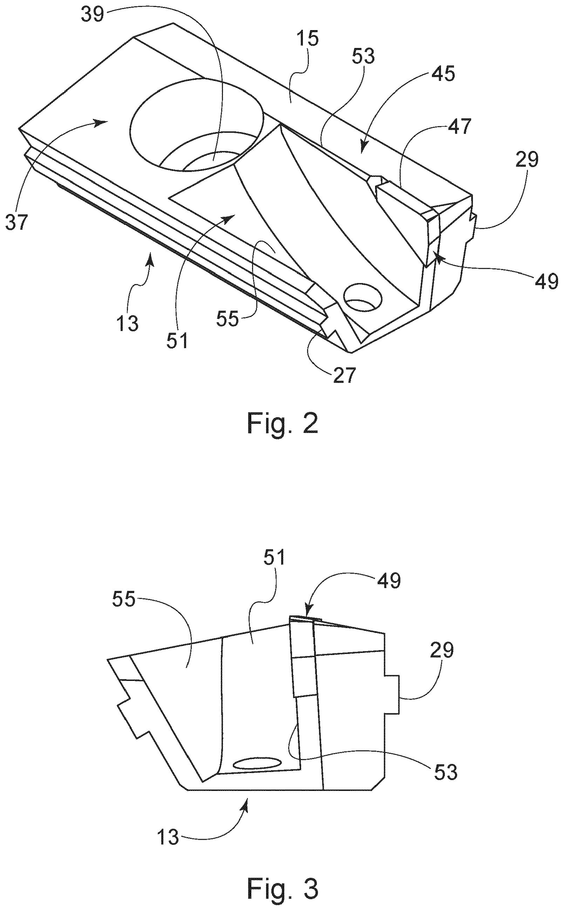

Referring in particular to Figs. 2 and 3, the cutting blade-holding cartridge 13 according to the invention comprises an elongated metal body in which in which a solid fixing portion 37 is provided having a hole 39 for a screw 41 engaging in the body of the milling cutter 11 in a corresponding threaded hole 43 provided in the bottom wall of the radial seat 21.

In the body of the cartridge 13 there is further provided a hollow working portion 45 defining a fixing surface 47 for a cutting blade 49. The cutting blade 49 may be, for example, a polycrystalline diamond bit, fixed to the fixing surface 47, for example, by means of braze-welding.

In the hollow portion 45 there is further provided a chip-evacuation cavity or gap 51, having substantially plan opposite walls 53, 55, which are non-parallel to each other and diverging outwards, so as to promote evacuation of the chips formed while the milling cutter 11 is working, as a result of the action of the cutting blade 49 against the surface of an object to be machined. The bottom wall 57 of the cavity 51 has a curved surface defining a corresponding ramp from the fixing portion 37 of the cartridge towards the open end of the working portion 45 of the cartridge 13.

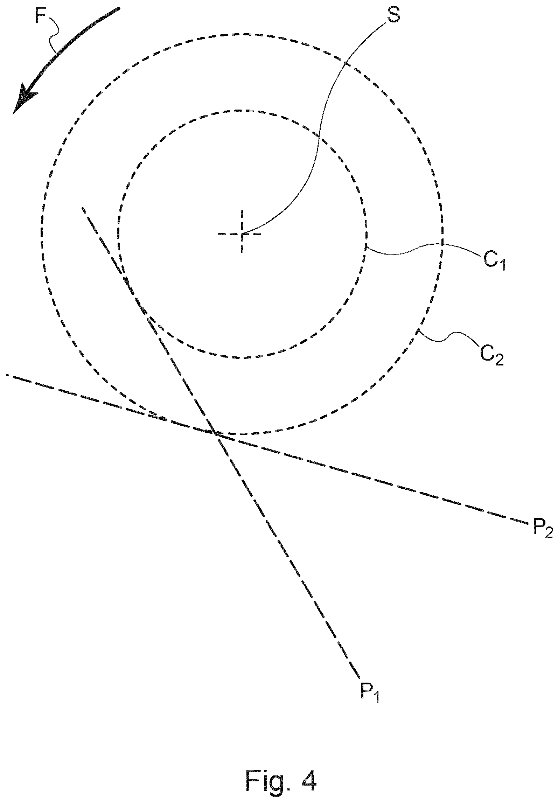

In addition, the walls 53, 55 are substantially parallel to the first 33 and second 35 wall of the seat 21, respectively, and, therefore, they are also tangent to two circumferences, with different diameters, arranged concentrically around the axis "S", wherein the wall tangent to the circumference with greater diameter is the one preceding, during rotation of the milling cutter 11, the cutting blade 49 when the milling cutter 11 rotates clockwise as shown in Fig. 4, where the direction of rotation of the milling cutter is indicated by arrow "F".

### Industrial applicability

The milling cutter according to the invention finds advantageous application in the field of machining, both finishing and roughing, by material removal in which milling cutters are used equipped with interchangeable cartridges to which a cutting blade performing the machining operation is associated.

The invention as described and illustrated is susceptible to numerous variations and modifications.

## Claims

1. Rotary milling cutter (11) having at least one cutting blade-holding cartridge (13) and comprising an elongated cylindrical body (15) in which there are provided an engagement portion (17), adapted to be associated with the spindle of a rotary tool, and a working portion (19), comprising at least one cartridge-holding radial seat (21) capable of housing a cutting blade-holding cartridge (13), **characterized in that** said seat (21) comprises a pair of mutually opposite grooves (23,25), and **in that** said seat (21) comprises a corresponding pair of complementary projections (27,29) arranged to be received in said grooves (23,25) so as to retain the cartridge (13) within the seat (21) during rotation of the milling cutter.

2. Milling cutter according to claim 1, wherein said grooves (23,25) and said projections (27,29) extend along a rectilinear direction parallel to the rotation axis (S) of the milling cutter (11).

3. Milling cutter according to claim 1 or 2, wherein said grooves (23,25) and said projections (27,29) have a square or rectangular cross-section.

4. Milling cutter according to claim 1 or 2 or 3, wherein at least one of said projections (27,29) includes at least one interruption.

5. Milling cutter according to claim 4, wherein said at least one interruption defines at least a pair of teeth.

6. Milling cutter according to any of the preceding claims, wherein said seat (21) comprises an axial opening (31) for inserting the cartridge (13) into the seat (21) by means of an axial sliding movement of the projections (27,29) within the respective grooves (23,25), along a substantially axial direction.

7. Milling cutter according to claim 6, wherein the grooves (23,25) extend over at least 2/3 of the axial depth of the seat (21).

8. Milling cutter according to claim 7, wherein the grooves are formed in two mutually opposite walls (33,35) of the seat (21), wherein a first wall is defined on a radial plane (PI) parallel to the axis of symmetry (S) of the milling cutter and tangent to a first circumference (C1) on a plane perpendicular to the axis of symmetry of the milling cutter, and a second wall is defined on a radial plane (P2) parallel to the axis of the milling cutter and tangent to a second circumference (C2) on a plane perpendicular to the axis of the milling cutter, said second circumference having a radius (r2) smaller than the radius (r1) of the first circumference.

9. Milling cutter according to any of the preceding claims, wherein the groove (23,25) defines three mutually perpendicular walls, and wherein the bottom wall of the groove is parallel to the plane of the corresponding wall (33,35) in which the groove is provided.

10. Method for retaining a cutting blade-holding cartridge in the cartridge-holding seat of a rotary milling cutter, the method comprising the steps of:
- providing a rotary milling cutter (11) having an elongated cylindrical body (15) in which there are provided an engagement portion (17), adapted to be associated with the spindle of a rotary tool, and a working portion (19), comprising at least one radial cartridge-holding seat (21) capable of housing a cutting blade-holding cartridge (13);
- providing said cartridge-holding seat (21) with a pair of mutually opposite grooves (23,25);
- providing said cartridge (13) with a corresponding pair of projections (27,29) complementary to said grooves (23,25) and arranged to be received therein, so as to retain the cartridge (13) within the seat (21) during rotation of the milling cutter;
- inserting said cartridge (13) into the seat (21) by sliding the projections (27,29) into the corresponding grooves (23,25).
